# EUROPÄISCHE PATENTANMELDUNG

(11) **EP 1 942 031 A2**
(43) Veröffentlichungstag der Anmeldung: **09.07.2008**
(21) Anmeldenummer: 07022636.0
(22) Anmeldetag: 22.11.2007
(51) Int. Cl.: B60R 1/074

(54) **Einfahrbarer Mechanismus für Aussenspiegel**

(30) Priorität: 08.01.2007 IE 20070008
(71) Anmelder: Hammer, Oliver, 97294 Unterleichfeld (DE)
(72) Erfinder: Hammer, Oliver, 97294 Unterleichfeld (DE)

(57) **Zusammenfassung**

Diese aktuelle Erfindung bezieht sich auf einen einfahrbaren Mechanismus für Außenspiegel (10) für PKW's, LKW's und andere Fahrzeuge. Er wird im eingefahrenen Zustand komplett abgedeckt. Das Aussehen dieses Außenspiegels ist im ausgefahrenen Zustand eines "normalen" Außenspiegels entsprechend und setzt daher keine Besonderheiten im Straßenverkehr dar.

Die Erfindung umfasst den Außenspiegel, Antriebe/ Installation des Mechanismus (10) fürs Aus-und Einklappen, Ein- und Ausziehen, kompletter Abdeckung sowie eine Steuerung der Antriebe.

Der Mechanismus (10) befindet sich im gesonderten Bereich der Türe bzw. im Kotflügel des Fahrzeuges. Es wird zwischen der ausgefahrenen Position, wo es sich außerhalb des Fahrzeuges, und der eingefahrenen Position, wo es sich im Fahrzeugchassis befindet, bewegt. Desweiteren wird eine schützende vertikal verschiebbare Oberfläche passend zum Fahrzeug installiert, um den Außenspiegel komplett abzudecken. Die Bedienung kann durch eine manuelle oder/ und automatische Steuerung erfolgen um den Komfort zu verbessern.

Die Erfindung ist ingenieurwissenschaftlich noch nicht abgeschlossen, es kann verändert oder modifiziert werden, ohne die Grundidee in Frage zu stellen.

## Beschreibung

Diese aktuelle Erfindung bezieht sich auf einen einfahrbaren Mechanismus fuer Außenspiegel für PKW's, LKW's und andere Fahrzeuge.

Einfahrbare Mechanismen fuer Außenspiegel sind schon bekannt. Zum Beispiel das FR 2.864.488. Es zeigt einen einfahrbaren Mechanismus fuer Außenspiegel im Kotflügel, welches in einem Gehäuse fuer Außenspiegel eingefasst ist und an der Außenseite des Fahrzeugs bündig anliegt. Das Außenspiegelgehäuse ist drehbar, um von der eingefahrenen Position in den ausgefahrenen Zustand zu gelangen. In der eingefahrenen Position ist die Außenfläche des Spiegelgehäuses mit dem Außenkleid des Fahrzeugs bündig. Im ausgefahrenen Zustand befindet sich das Spiegelgehaeuse außerhalb des Fahrzeugchassis.

Der komplette abgedeckte Außenspiegel erweist sich besonders vorteilhaft beim Reinigen in Waschanlagen, bei engen Einfahrten und bei schmalen Garagen. Zudem können die Spiegel besser vor Verschmutzung, Vandalismus oder einer Vereisung durch vorbeifahrende Fahrzeuge im Winter geschützt werden.

Laut der aktuellen Erfindung, gibt es einen einziehbaren Mechanismus fuer Außenspiegel welches folgendes umfasst:

Ein Außenspiegelrahmen ist so angeordnet, um zwischen der ausgefahrenen Position, wo es sich außerhalb des Fahrzeuges, und der eingefahrenen Position, wo es sich im Fahrzeugchassis befindet, zu bewegen. Des weiteren eine schützende Oberfläche passend zum Fahrzeug, weiches sich im ein- und ausgefahrenen Zustand schließt.

Im Bezug auf der oben erwähnten Beschreibung, befindet es sich in einem gesonderten Bereich de Fahrzeugtüre (Dreiecksbereich) bzw. im Kotflügel.

Im Bezug auf der oben erwähnten Beschreibung ist es mit einem Drehpunkt ermöglichen. Als Alternative befindet sich besagter Spiegelmechanismus im Kotflügel im Fahrzeug.

Eine Erklärung der Erfindung wird nun beschrieben im Bezug auf den beigelegten Zeichnungen.

Skizze 1 stellt eine Frontansicht mit einfahrbarem Mechanismus für Außenspiegel dar. Es umfasst Spiegelrahmen in seiner eingefahrenen Position, laut der bevorzugten Version der jetzigen Erfindung.

Skizze 2 stellt eine Innenansicht mit einfahrbarem Mechanismus für Außenspiegel von Skizze 1 dar. Während dem Übergang zwischen der ein- und ausgefahrenen Position des Spiegetrahmens.

Skizze 3 stellt eine Frontansicht mit Außenspiegelrahmen in seiner ausgefahrenen Position dar.

Skizze 4 stellt eine räumliche Darstellung mit einfahrbarem Mechanismus für Außenspiegel von Skizze 3 dar. Während des Übergangs zwischen aus- und eingefahrener Position des Außenspiegelrahmens.

Skizze 5 stellt eine räumliche Darstellung des Außenspiegelmechanismus von Skizze 4 dar.

Bezüglich Skizze 1 gibt es einen einfahrbaren Mechanismus für Außenspiegel (10) mit der bevorzugten Version der jetzigen Erfindung.

Der Mechanismus (10) umfasst einen Außenspiegelrahmen (12) mit Spiegel (13), (siehe Skizze 2) untergebracht im Dreiecksbereich (14) einer Fahrzeugtüre. Der Dreiecksbereich (14) ist definiert durch Rahmen (16), welches einen oberen, unteren und im allgemeinen vertikalen Rahmen (18, 20 und 22) besitzt. Es wird jedoch angemerkt, dass das Gehäuse auch in einem anderen geeigneten Bereich des Fahrzeuges untergebracht werden kann z. B. im vorderen Kotflügel des Fahrzeuges.

Der Außenspiegelrahmen (12) wird von einer stabilen Strebe (24) gehalten. Die Strebe (24) ist im Drehpunkt mit dem Motor (26) über eine Welle (28) befestigt. Der Motor (26) ist verbunden mit dem Ende der Welle (30) vom Zylinder (32) und ermöglicht die Bewegung des Aussenspiegelrahmens (12). Es ermöglicht auch die Bewegung von seiner eingefahrenen Position, wie in Skizze 1 dargestellt zu der ausgefahrenen Position, wie in Skizze 3 dargestellt und wird später noch näher erklärt. Die Welle (28), Motor (26) und Zylinder (32) sind mit der Türe oder Fahrzeugrahmen (nicht gezeigt) verbunden. Es stellt die Möglichkeit frei den Motor durch einen anderen Mechanismus zu ersetzen.

Ein Schild (34), in gleicher Form wie der Rahmen (16), ist vorgesehen, um die Dreiecksecke (14) von der Außenseite des Fahrzeugs mit den Seiten (18', 20' und 22'), wie in Skizze 2 gezeigt, abzudecken.

In bevorzugter Version ist ein motorisiertes Seilzugsystem (36) mit dem Fahrzeug und mit dem Schild (34) verbunden. Es arbeitet in geschlossener Position, während der Außenspiegelrahmen (12) sich in der eingefahrenen Position befindet. Es beherbergt auch einen Raum für die Abwärtsbewegung des Schildes (34) des Dreiecksraumes (14).

Wie in Skizze 1 und 2 gezeigt, arbeitet das Seilzugsystem (36) in gleicher Weise wie ein konventioneller Fensterheber. Das System (36) umfasst zwei Rollen (38, 40) und ebenfalls eine Vertikalschiene (46) sowie eine dritte motorisierte Rolle (42). Darüber hinaus besteht das System aus einer Auflagerschiene (44), welches das Auflager fuer die Unterseite (18') vom Schild (34) ist. Das System ermöglicht die Kontrolle der Bewegung durch die Auflagerschiene (44), dem Schild (34), die Vertikalschiene (46) und die mit einem Seil verbundenen ersten und zweiten Rollen (38 und 40).

Es wird jedoch erwähnt, daß das Seilzugsystem (36) auch durch ein anderes mögliches System zur Bewegung des Schildes (34) ausgeführt bzw. mit dem konventionellen Fensterheber verbunden werden kann.

Skizze 2 stellt den Übergang dar. Das Schild (34) wird durch das Seilzugsystem (36) abgesenkt, während der Motor (26) den Außenspiegelrahmen (12) über den Drehpunkt durch den geöffneten Dreiecksbereich (14) nach Außen des Fahrzeuges befördert. Über die Wellen (28), Strebe (24) und dadurch den Außenspiegelrahmen (12), der sich in Richtung des vertikalen Armes (22) des Rahmens (16) bewegt, wird gleichzeitig der Zylinder (32) eingezogen.

Der vertikale Arm (22) des Rahmens (16) umfasst ein metallgefederten Schieber (48). Er befindet sich anhängend am unteren Arm (18) des Rahmens (16). Während der Außenspiegel in die eingefahrene Position fährt, versetzt die Strebe (24) dem metallgefederten Schieber (48) aus der Grundposition des vertikalen Armes (22) und des Panels (50). Der vertikale Arm (22) ermöglicht den verschobenen metallgefederten Schieber (48) aufzunehmen.

Eine Alternative wäre, daß der vertikale Arm (22) die notwendige Dicke besitzt, um sowohl den metallgefederten Schieber (48), als auch die Strebe (24), wenn der Zylinder (32) ganz ausgeschoben ist, aufzunehmen. In diesem Falle benötigt das Panel (50) keine Veränderung, um den metallgefederten Schieber (48) aufzunehmen.

Der metallgefederte Schieber (48) hat die selbe Form wie die Strebe (24). Der vertikale Arm enthält die Strebe (24), welches bündig mit dem vertikalen Arm (22) abschließt, wenn der Zylinder ganz eingezogen wird.

In seinem ausgefahrenen Zustand mit dem Außenspiegelrahmen (12) wird das Schild (34) nach oben geschoben, um den Dreiecksbereich, wie in Skizze 3 beschrieben, zu schließen.

Figure (4) und (5) enthält eine Innen- und Außendarstellung. Es zeigt besonders den Mechanismus (10), welches die Re-Rotation des Außenspiegelgehäuses (12) darstellt. Ein ausgezogener Zylinder (32), um das Außenspiegelgehäuse (12) in seiner Position einzufahren, sowie das nach oben geschobene Schild (34) im Dreiecksbereich (14).

Wie schon in den vorher erwähnten Alternativen sind andere Variationen möglich. So zum Beispiel kann der Zylinder auch in anderer Richtung angebracht sein, um den Außenspiegelrahmen in ein- und ausgefahrener Position zu bringen.

Die Steuerung kann über eine manuelle Bedienung per Knopfdruck an der Bedienungsarmatur erfolgen. Eine automatische Steuerung per Sensorauslösing z. B. bei Mindestabstand einer Wand oder per Zeiteinstellung z. B. ab einer bestimmten Uhrzeit oder bestimmten Temperatur.

Der Außenspiegel soll die gleichen Eigenschaften besitzen wie ein "normaler" Außenspiegel und keine Besonderheit fuer den Straßenverkehr darstellen. Die Erfindung ist nicht abgeschlossen, wie beschrieben kann es verändert oder modifiziert werden, ohne die Grundidee in Frage zu stellen.

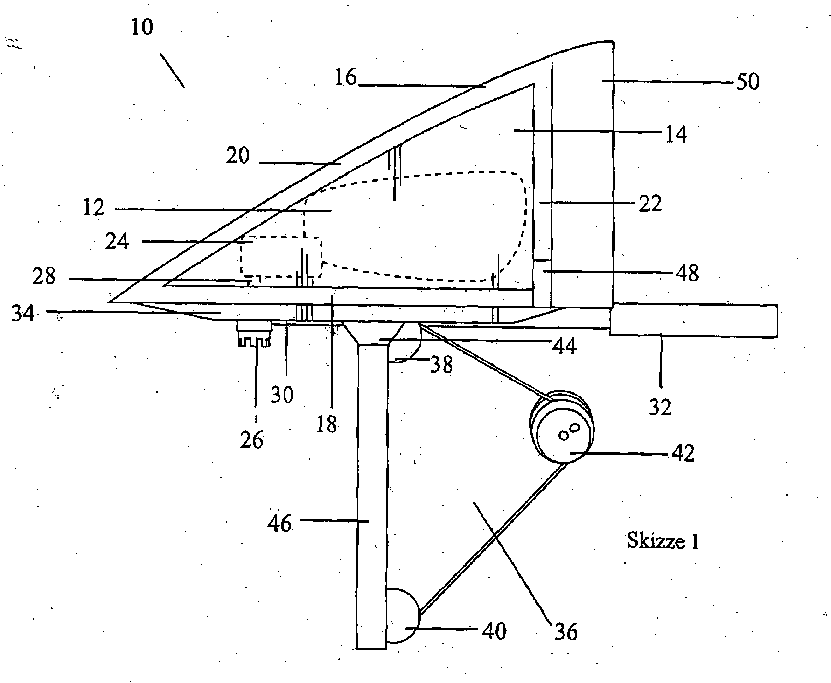

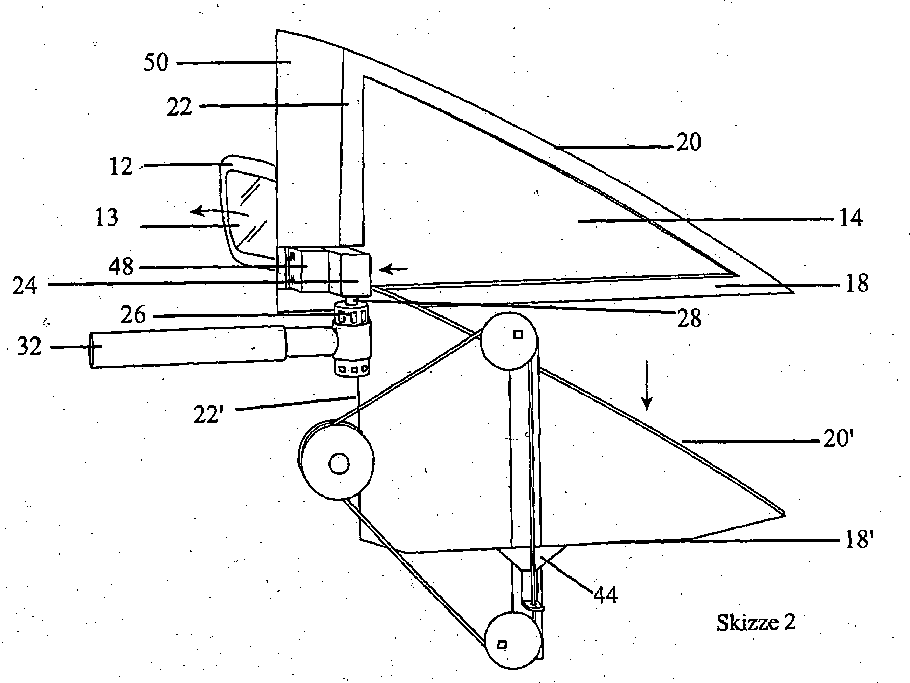

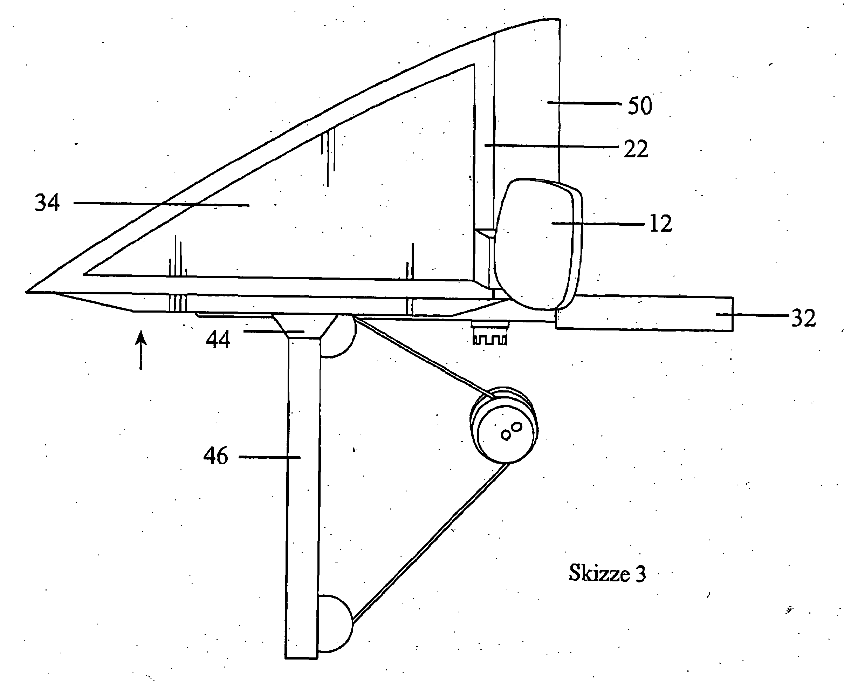

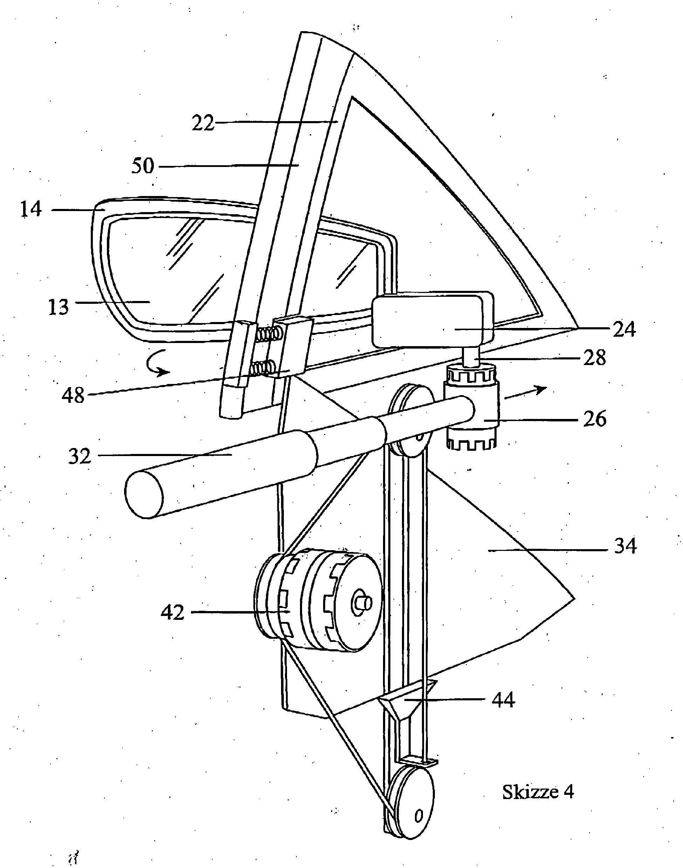

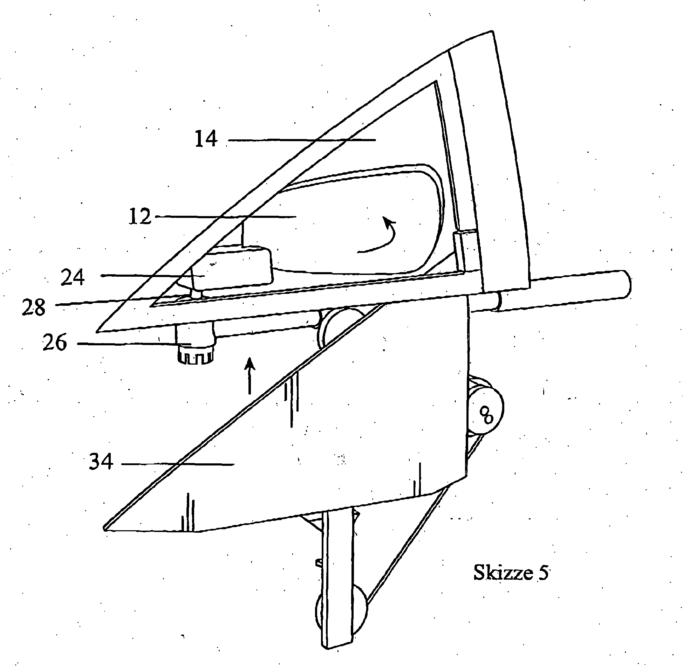

## Patentansprüche

1. Vorrichtung zum komplett abgedeckten, ein- und ausklappbaren sowie ein-und ausziehbaren Außenspiegel eines PKW's, LKW's oder eines anderen Fahrzeuges, um in eine ein- und ausgefahrene Position zu bewegen, umfassend
einen Außenspiegelrahmen (12) mit Spiegel (13) untergebracht in einem gesonderten bzw. in einem anderen geeigneten Bereich (14) des Fahrzeuges.
einen Mechanismus fürs Ein-und Ausklappen (24, 26, 28) des Außenspiegelrahmens im Fahrzeug.
einen Mechanismus im Fahrzeug fürs Ein- und Ausziehen (30, 32) des Außenspiegelrahmens, der die horizontale Bewegung ermöglicht.
ein motorisiertes Seilzugsystem mit Antrieb (16, 34, 42, 46) im Fahrzeug - ähnlich eines konventionellen Fensterhebers - welches die vertikale Bewegung ermöglicht, um den eingeklappten Außenspiegel komplett abzudecken.
einen metallgefederten Schieber des Rahmens (16, 18), der die Aufnahme der Strebe (24) in bündiger Form ermöglicht, um die vertikale Bewegung des Schildes (20') anschlagsfrei komplett zu gewährleisten.
eine Betätigung des gesamten Mechanismus über manuelle oder automatische Steuerung

2. Vorrichtung nach Anspruch 1 **dadurch gekennzeichnet, daß** Außenspiegelrahmen (12) und Spiegel (13) nachfolgend als Außenspiegel bezeichnet werden.

3. Vorrichtung nach Anspruch 1 **dadurch gekennzeichnet, daß** der Dreiecksbereich (14) im verglasten Element zwischen Fahrzeugtuere und Frontschutzscheibe bzw. im vorderen Bereich der Fahrzeugtüre sich befindet bzw. im Kotflügel des Fahrzeuges.

4. Vorrichtung nach Anspruch 1 **dadurch gekennzeichnet, daß** die Strebe (24) den Außenspiegel hält, sich im Drehpunkt mit dem Motor (26) befindet und im Fahrzeug befestigt wird.

5. Vorrichtung nach Anspruch 1 **dadurch gekennzeichnet, daß** der Motor (26) bzw. anderen drehenden Mechanismus, mit dem Ende der Welle (30) vom Zylinder (32) verbunden ist und dieser im Fahrzeug befestigt wird.

6. Vorrichtung nach Anspruch 1/5 **dadurch gekennzeichnet, daß** es die horizontale Bewegung des Außenspiegels in ein- und ausgefahrener Position ermöglicht.

7. Vorrichtung nach Anspruch 1 **dadurch gekennzeichnet, daß** das Seilzugsystem (36), beiden Schienen (44, 46) sowie drei Rollen (38, 40, 42) umfaßt, welches die vertikale Bewegung des Schildes (34) ermöglicht.

8. Vorrichtung nach Anspruch 1 **dadurch gekennzeichnet, daß** das gesamte Seilzugsystem mit dem konventionellen Fensterheber kombiniert werden kann, als auch durch ein anderes mögliches System zur Bewegung des Schildes (34) ausgeführt werden kann und im Fahrzeug befestigt wird.

9. Vorrichtung nach Anspruch 1 **dadurch gekennzeichnet, daß** der vertikale Arm (22) des Rahmens (16) einen metallgefederten Schieber (48) besitzt, der die Strebe (24) ganz umfasst, wenn der Außenspiegel in ausgefahrenen Position sich befindet, und bei eingefahrenen Außenspiegel durch die Feder wieder zurückfährt

10. Vorrichtung nach Anspruch 1 **dadurch gekennzeichnet, daß** eine manuelle Steuerung per Knopfdruck, an der Bedienungsarmatur, und/ oder automatische Steuerung per Sensor, erfolgt.
